# EUROPEAN PATENT SPECIFICATION

(11) **EP 4 206 444 B1**
(45) Date of publication and mention of the grant of the patent: **11.06.2025**
(21) Application number: 22217397.3
(22) Date of filing: 30.12.2022
(51) Int. Cl.: F01N 3/025, F01N 3/20, F01N 5/02, F01N 13/08, F01N 13/00, F01N 3/00, F01P 3/00

(54) **IMPROVED INTERNAL COMBUSTION ENGINE PROVIDED WITH AN EXHAUST GAS HEAT RECOVERY SYSTEM AND METHOD TO CONTROL SAID ENGINE**
VERBESSERTER VERBRENNUNGSMOTOR MIT EINEM ABGASWÄRMERÜCKGEWINNUNGSSYSTEM UND VERFAHREN ZUR STEUERUNG DES BESAGTEN MOTORS
MOTEUR À COMBUSTION INTERNE AMÉLIORÉ POURVU D'UN SYSTÈME DE RÉCUPÉRATION DE CHALEUR DES GAZ D'ÉCHAPPEMENT ET PROCÉDÉ DE COMMANDE DUDIT MOTEUR

(30) Priority: 31.12.2021 IT 202100033182
(43) Date of publication of application: 05.07.2023
(73) Proprietor: Marelli Europe S.p.A., 20011 Corbetta (MI) (IT)
(72) Inventor: DE CESARE, Matteo, 20011 CORBETTA (MI) (IT); BRUGNONI, Enrico, 20011 CORBETTA (MI) (IT)
(74) Representative: Novagraaf Group

(56) References cited:
- DE-A1- 4 340 463
- US-A1- 2006 130 469
- US-A1- 2014 352 279

## Description

### TECHNICAL FIELD

The present invention relates to an improved internal combustion engine provided with an exhaust gas heat recovery system and a method to control said engine.

### PRIOR ART

As is known, an internal combustion engine is typically provided with a number of cylinders, each of which is connected to an intake manifold and an exhaust manifold, to which an exhaust duct is connected that feeds exhaust gases produced by the combustion to an exhaust system, which emits the gases produced by the combustion into the atmosphere.

Typically, a vehicle is also provided with a conditioning system designed to cause a conditioning fluid to circulate in order to keep the temperature of the internal combustion engine within a range of acceptable temperature values. The conditioning system comprises a pumping device designed to increase the pressure of the conditioning fluid and a heat exchanger, such as e.g. a radiator, designed to cool the conditioning fluid. The conditioning system also comprises a flow adjustment valve device for allowing the passage of the conditioning fluid towards the heat exchanger or towards the pumping device as a function of a temperature threshold that can vary as a function of the operating conditions of the engine. In the case where the temperature of the conditioning fluid is below the temperature threshold, the conditioning fluid will return directly to the pumping device without passing through the heat exchanger while, in the case where the temperature of the conditioning fluid is above the temperature threshold, the conditioning fluid passes through the heat exchanger in order to reduce its temperature before returning to the pumping device.

Further provided is an apparatus for heating the passenger compartment which comprises a heat exchanger such as, for example, a radiator that acts as a heat exchanger between the conditioning fluid and the air so as to cool the conditioning fluid and heat the air before it is introduced into the passenger compartment. The air directed to the passenger compartment is forced by means of a fan through the heat exchanger and, subsequently, the conditioning fluid leaving the heat exchanger is conveyed to the pumping device.

In hybrid drive vehicles driving in electric mode, and in vehicles with only an internal combustion engine that are equipped with a start-stop device when stationary, the internal combustion engine, which would otherwise remain turned off to reduce consumption, is forced to start in order to fulfil passenger compartment heating requests.

In hybrid drive vehicles, it is of paramount importance to keep the temperature of the storage system within a value range in order to ensure its integrity and a good efficiency and availability of power during both charging and discharging phases. During the first driving phases, especially in low-temperature ambient conditions, it can be necessary to actively warm up the storage system, using electric heaters and/or the heat of the conditioning fluid of the engine once it has reached a high enough temperature.

Finally, an engine oil cooling circuit is provided, which in turn comprises a heat exchanger designed to cool the engine oil by means of the conditioning fluid.

Also provided for some years now are circuits which allow a part of the thermal energy of the exhaust gases to be recovered that would otherwise be lost in order to heat the conditioning fluid flowing through the heat exchangers in the engine oil cooling circuit and the passenger compartment heating apparatus, respectively, in the initial phases of a driving cycle when the engine is not yet thermally regulated. In these phases, the conditioning fluid heats up faster than the oil so that the exchanger that typically serves to cool the oil becomes an exchanger to heat the oil. Typically, the exhaust gas heat recovery system is arranged along the exhaust duct and is designed to heat the conditioning fluid by means of the exhaust gases. Heating the oil quickly allows engine frictions to be significantly reduced whereby consumption of the engine is reduced.

Internal combustion engines provided with an exhaust gas heat recovery system are described, for example, in US-A1-2006130469, DE-A1-4340463, US-A1-2014352279.

Exhaust gas heat recovery systems of the type just described allow part of the thermal energy of the exhaust gases to be recovered that would otherwise be lost but, however, do not yield very high thermal energy values in the heat exchange between the conditioning fluid and the exhaust gases, so that they do not always allow the oil to be heated very quickly.

### DESCRIPTION OF THE INVENTION

The object of the present invention is to provide an improved internal combustion engine provided with an exhaust gas heat recovery system that is free of the drawbacks described in the foregoing and, in particular, is easy and inexpensive to produce.

A further object of the present invention is to provide a method for controlling an improved internal combustion engine provided with an exhaust gas heat recovery system that is free of the drawbacks described in the foregoing and, in particular, is easy and inexpensive to implement.

According to the present invention an improved internal combustion engine provided with an exhaust gas heat recovery system and a method for controlling said engine in accordance with the appended claims are provided.

### BRIEF DESCRIPTION OF THE DRAWINGS

The present invention will now be described with reference to the accompanying drawings, which illustrate a non-limiting example embodiment thereof, wherein:
- Figure 1 schematically shows a first embodiment of an internal combustion engine provided with an exhaust gas heat recovery system in accordance with the present invention;
- Figure 2 schematically illustrates a second embodiment of the engine of Figure 1;
- Figure 3 schematically illustrates a third embodiment of the engine of Figure 1;
- Figure 4 schematically illustrates a fourth embodiment of the engine of Figure 1; and
- Figure 5 schematically illustrates a fifth embodiment of the engine of Figure 1.

### PREFERRED EMBODIMENTS OF THE INVENTION

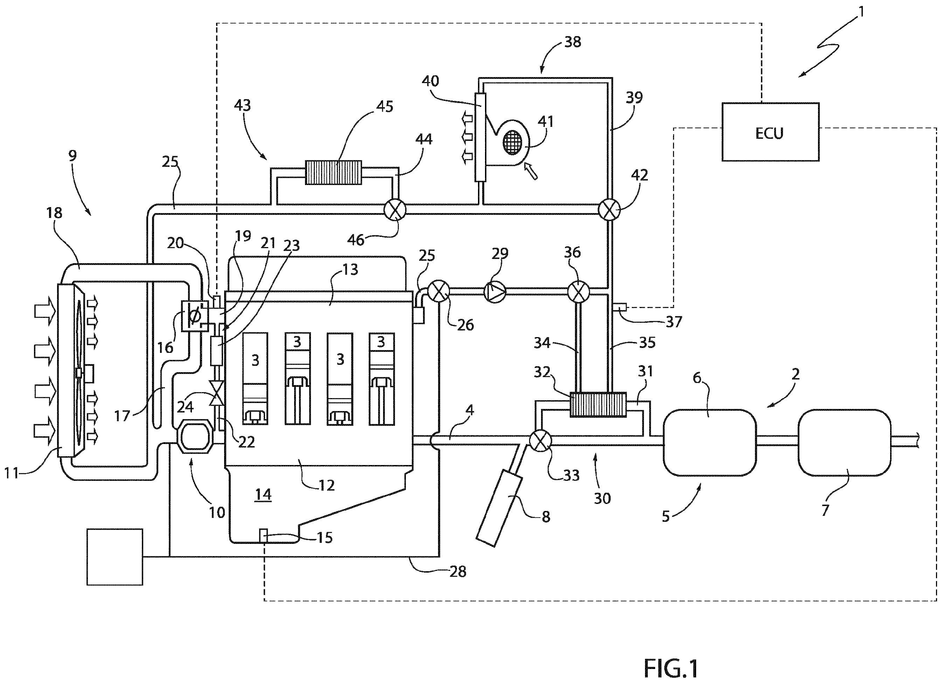

In Figure 1, the number 1 indicates, as a whole, an internal combustion engine, provided with an exhaust gas system 2 for exhaust gases in a motor vehicle (not illustrated) and having a number of cylinders 3, each of which is connected to an intake manifold (not illustrated) by means of at least one respective intake valve (not illustrated) and to an exhaust manifold (not illustrated) by means of at least one respective exhaust valve (not illustrated).

Connected to the exhaust manifold is an exhaust duct 4, which feeds the exhaust gases produced by the combustion to the exhaust system 2, which emits the gases produced by the combustion into the atmosphere. The exhaust gas system 2 is provided with an exhaust gas after-treatment system 5 comprising a pre-catalytic converter 6 arranged along the exhaust duct 4 and a particulate filter (gasoline particulate filter or diesel particulate filter) also arranged along the exhaust duct 4, downstream of the pre-catalytic converter 6. According to a preferred variant, the exhaust gas after-treatment system 5 is provided with a catalytic converter 7 arranged along the exhaust duct 4, upstream of the particulate filter. According to a preferred embodiment, the catalytic converter 7 and the particulate filter are arranged one after the other inside a common tubular container.

The exhaust gas after-treatment system 5 further comprises a burner 8 suited to introduce exhaust gases (and thus heat) into the exhaust duct 4 so as to speed up the heating of the pre-catalytic converter 6 and/or catalytic converter 7 and so as to facilitate the regeneration of the particulate filter. The burner 8 is arranged so as to introduce the exhaust gases into the exhaust duct 4 upstream of the pre-catalytic converter 6.

In particular, defined inside the burner 8 is a combustion chamber which receives fresh air (i.e. air from the external environment) via an air supply circuit (of a known type and not illustrated in detail) provided with a pumping device which draws air from the external environment preferably with the interposition of an air filter element, and feeds the air to the burner via a duct regulated by a shut-off valve (arranged downstream of the pumping device) and a fuel supply circuit provided with a pumping device which supplies the fuel via a duct. The combustion chamber receives the fuel via an injector suitable for injecting the fuel into the combustion chamber. Finally, a spark plug is coupled to the burner 8 in order to cause the ignition of the mixture present inside the combustion chamber.

The internal combustion engine 1 comprises a control system, which is designed to oversee the operation of said internal combustion engine 1. The control system comprises at least one electronic control unit (ECU), which oversees the operation of the various components of the internal combustion engine 1.

Figure 1 further illustrates a conditioning system 9 configured to cause a conditioning fluid, for example a water-glycol mixture, to circulate in order to keep the temperature of the internal combustion engine 1 within a safe temperature range.

The conditioning system 9 comprises a pumping device 10 designed to increase the pressure of the conditioning fluid that flows between a first and a second opening and a heat exchanger 11, such as e.g. a radiator, designed to cool the conditioning fluid.

As illustrated in Figure 1, the internal combustion engine 1 essentially comprises a block portion 12 and a head portion 13 fluidically connected to each other for the passage of the conditioning fluid. Also provided is an engine oil collection tank 14 equipped with an engine oil temperature sensor 15 connected to the electronic control unit ECU.

The conditioning system 9 further comprises a flow adjustment device 16, in particular a three-way valve, designed to allow the passage of the conditioning fluid leaving the head portion 13 towards the heat exchanger 11 or towards the pumping device 10 according to a predefined temperature threshold, which can depend on the operating conditions of the engine. In particular, the flow adjustment device 16 is connected to the pumping device 10 via a bypass duct 17 and to the heat exchanger 11 via a duct 18. In the case where the temperature of the conditioning fluid is lower than a predetermined threshold value, the latter will return directly to the pumping device 10 without passing through the heat exchanger 11 via the bypass duct 17 while, in the case where the temperature of the conditioning fluid is higher than the predetermined threshold value, the latter passes through the heat exchanger 11 in order to lower its temperature before returning to the pumping device 10.

The head portion 13 and the flow adjustment device 16 are connected via a duct 19 along which a temperature sensor 20 for detecting the temperature of the conditioning fluid and connected to the electronic control unit ECU is arranged.

Finally, an engine oil cooling circuit 21 flows into the conduit 19, the engine oil cooling circuit 21 comprising a duct 22 which originates downstream of the pumping device 10 and along which is housed a heat exchanger 23 for cooling the engine oil by means of the conditioning fluid. A flow adjustment device 24 can also be provided, arranged along the duct 22, downstream of the heat exchanger 23.

The conditioning system 9 further comprises a duct 25 in which the conditioning fluid leaving the head portion 13 flows and along which a flow adjustment device 26, namely a three-way valve 26, is arranged. The three-way valve 26 is suited to allow the passage of the conditioning fluid alternatively fed downstream of the internal combustion engine 1 or from a point upstream of the internal combustion engine 1 to which it is connected via a duct 28.

A pumping device 29 is housed along the duct 25, downstream of the three-way valve 26.

An exhaust gas heat recovery system 30 is arranged along the exhaust duct 4. The exhaust gas heat recovery system 30 is interposed between the burner 8 and the pre-catalytic converter 6 and is designed to heat the conditioning fluid by means of the exhaust gases. The exhaust gas heat recovery system 30 comprises a duct 31 arranged in parallel to the exhaust duct 4, which originates downstream of the burner 8 and ends upstream of the pre-catalytic converter 6. A heat exchanger 32 designed to heat the conditioning fluid by means of the exhaust gases is arranged along the duct 31. Also provided is a flow adjustment device 33, in particular a three-way valve, arranged in the area of the point where the duct 31 originates from the exhaust duct 4. Also provided are a conditioning fluid delivery duct 34 that runs from the duct 25, downstream of the pumping device 29, to the heat exchanger 32, and a conditioning fluid return duct 35 from the heat exchanger 32 to the duct 25.

A flow adjustment device 36, in particular a three-way valve, is also provided, arranged in the area of the point where the delivery duct 34 originates from the duct 25. Finally, the exhaust gas heat recovery system 30 comprises a conditioning fluid temperature sensor 37 housed along the return duct 35 and connected to the electronic control unit ECU.

Also housed along the duct 25 is an apparatus 38 for heating the passenger compartment which comprises a duct 39 along which a heat exchanger 40 such as, for example, a radiator is arranged, which acts as a heat exchanger between the conditioning fluid from the high-temperature internal combustion engine 1 and the air, so as to cool the conditioning fluid and heat the air before it is introduced into the passenger compartment. The air directed to the passenger compartment is forced by means of a fan 41 to pass through the heat exchanger 40. The conditioning fluid leaving the heat exchanger 40 is conveyed via the duct 25 to the pumping device 10.

According to a preferred embodiment, a flow adjustment device 42 is provided, in particular a three-way valve, arranged in the area of the point where the duct 39 originates from the duct 25.

Finally, a circuit 43 for heating a storage system, in the case of a hybrid drive vehicle, is arranged along the duct 25. The circuit 43 comprises a duct 44 arranged in parallel to the duct 25, which originates downstream of the apparatus 38 for heating the passenger compartment. Housed along the duct 44 is a heat exchanger 45 suited to condition the storage system by means of the conditioning fluid. A flow adjustment device 46 is also provided, in particular in the area of the point where the duct 44 originates from the duct 25.

The following operating modes of the conditioning system 9 are provided using the thermal power provided by the exhaust gas heat recovery system 30:
- in the case where the vehicle is travelling in a purely electric mode (i.e. with the internal combustion engine 1 turned off) and there is a passenger compartment heating request, the adjustment device 26 is controlled to allow the passage of the conditioning fluid from the point upstream of the internal combustion engine 1, the adjustment device 36 is controlled so as to allow the passage of the conditioning fluid into the delivery duct 34 and the adjustment device 42 is controlled so as to allow the passage of the conditioning fluid towards the heat exchanger 40; or
- in the case where the vehicle is travelling in a purely electric mode (i.e. with the internal combustion engine 1 turned off) and there is a storage system heating request, the adjustment device 26 is controlled to allow the passage of the conditioning fluid from the point upstream of the internal combustion engine 1, the adjustment device 36 is controlled so as to allow the passage of the conditioning fluid into the delivery duct 34 and the adjustment device 46 is controlled so as to allow the passage of the conditioning fluid towards the heat exchanger 45; or
- in the case where the vehicle is travelling with the internal combustion engine 1 running, the adjustment device 26 is controlled to allow the passage of the conditioning fluid from the internal combustion engine 1.

The layout illustrated in Figure 1 allows the maximum thermal power to be obtained from the exhaust gases for heating the conditioning fluid at the expense of heating the pre-catalytic converter 6 and/or the catalytic converter 7 and the regeneration of the particulate filter, during the phase of heating the conditioning fluid.

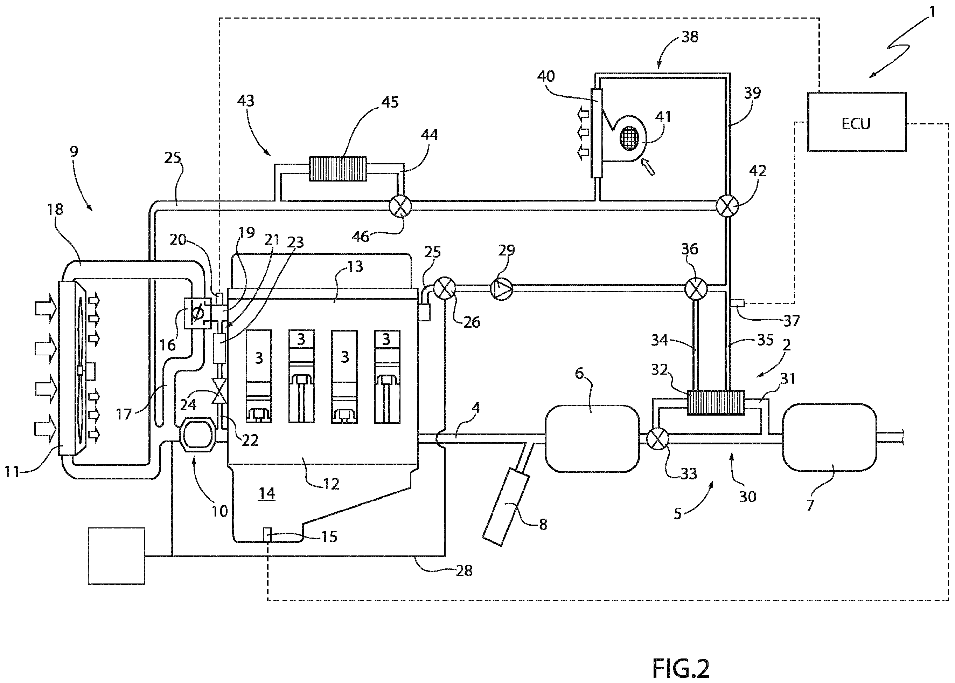

According to the embodiment illustrated in Figure 2, the exhaust gas heat recovery system 30 is interposed between the pre-catalytic converter 6 and the catalytic converter 7 and is designed to heat the conditioning fluid by means of the exhaust gases. The duct 26 is arranged in parallel to the exhaust duct 4, originates downstream of the catalytic converter 6 and ends upstream of the catalytic converter 7.

The layout illustrated in Figure 2 allows a lower thermal power to be obtained from the exhaust gases for heating the conditioning fluid compared to the layout illustrated in Figure 1, without compromising the heating of the pre-catalytic converter 6 yet still reducing the heating of the catalytic converter 7 (and the regeneration of the particulate filter), during the phase of heating the conditioning fluid.

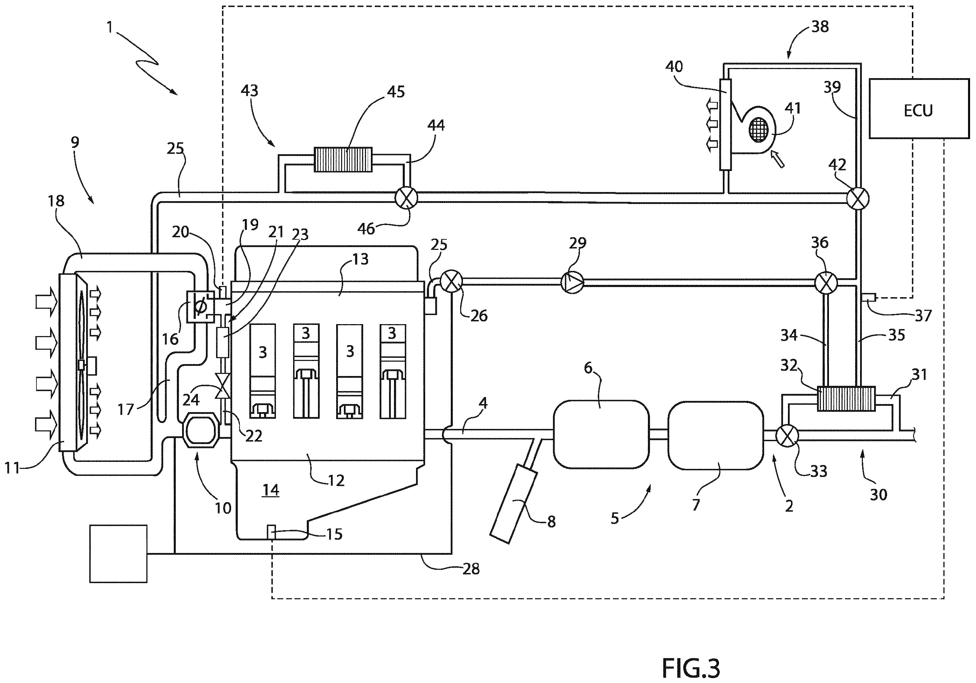

According to the embodiment illustrated in Figure 3, the exhaust gas heat recovery system 30 is arranged downstream of the catalytic converter 7 and is designed to heat the conditioning fluid by means of the exhaust gases. The duct 26 is arranged in parallel to the exhaust duct 4 and originates and ends downstream of the catalytic converter 7.

The layout illustrated in Figure 3 allows a lower thermal power to be obtained from the exhaust gases for heating the conditioning fluid compared to the layouts illustrated in both Figure 1 and Figure 2, without compromising the heating of the pre-catalytic converter 6 and the catalytic converter 7 (and the regeneration of the particulate filter) even during the phase of heating the conditioning fluid.

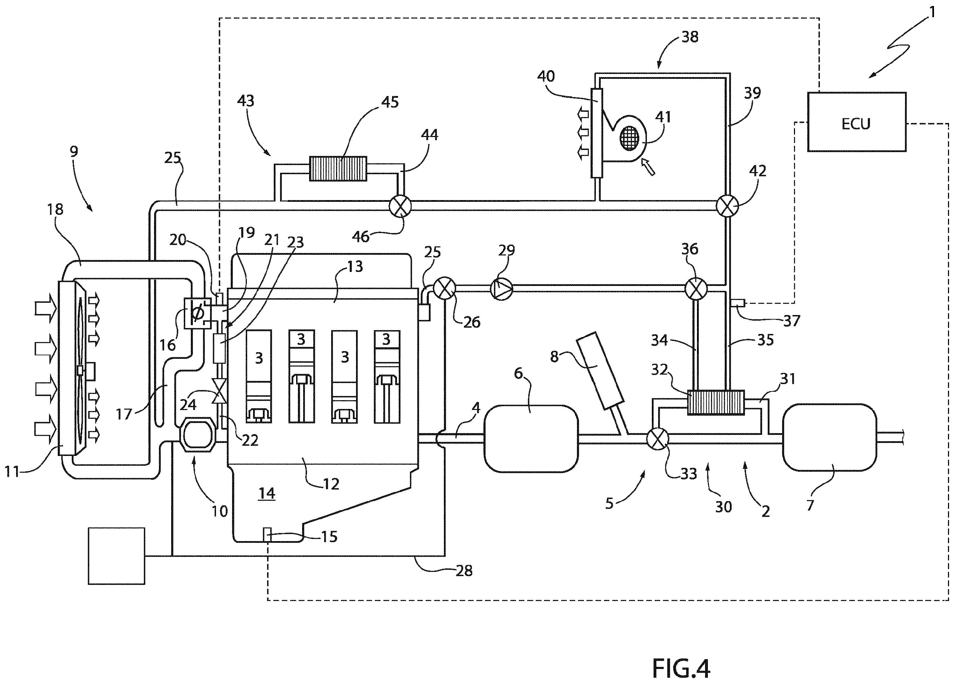

According to the embodiment illustrated in Figure 4, the burner 8 is arranged so as to introduce exhaust gases into the exhaust duct 4 upstream of the catalytic converter 7 and is interposed between the pre-catalytic converter 6 and the catalytic converter 7. The exhaust gas heat recovery system 30 is interposed between the burner 8 and the catalytic converter 7 and is designed to heat the conditioning fluid by means of the exhaust gases. The duct 26 is arranged in parallel to the exhaust duct 4, originates downstream of the burner 8 and ends upstream of the catalytic converter 7.

The layout illustrated in Figure 4 allows, in this installation configuration of the burner, the maximum thermal power to be obtained from the exhaust gases for heating the conditioning fluid at the expense of heating the catalytic converter 7 (and the regeneration of the particulate filter) during the phase of heating the conditioning fluid.

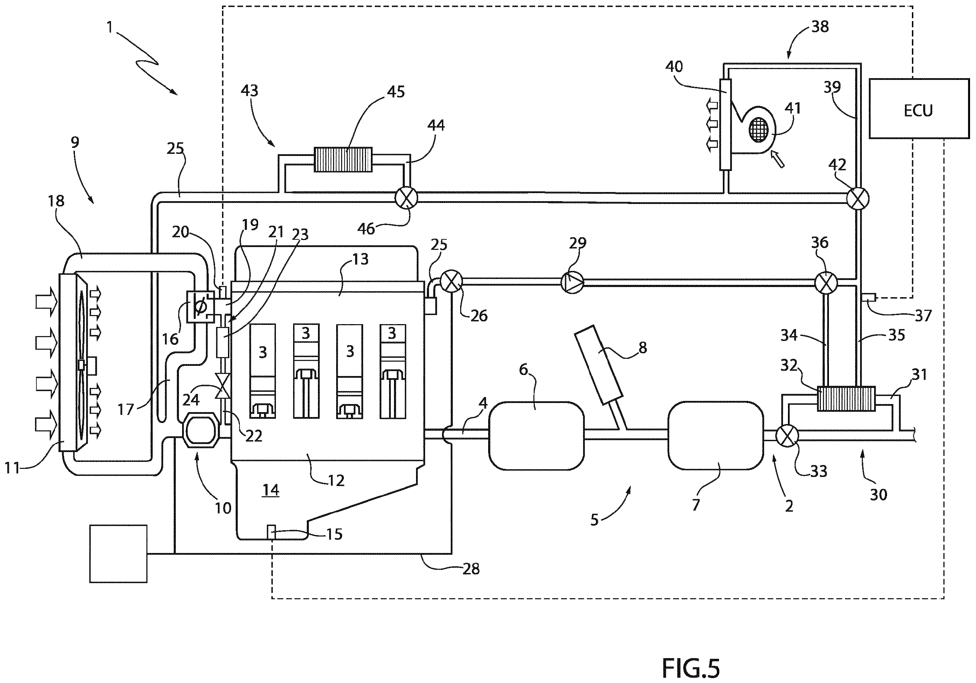

According to the embodiment illustrated in Figure 5, the burner 8 is arranged so as to introduce exhaust gases into the exhaust duct 4 upstream of the catalytic converter 7 and is interposed between the pre-catalytic converter 6 and the catalytic converter 7. The exhaust gas heat recovery system 30 is arranged downstream of the catalytic converter 7 and is designed to heat the conditioning fluid by means of the exhaust gases. The duct 26 is arranged in parallel to the exhaust duct 4 and originates and ends downstream of the catalytic converter 7.

The layout illustrated in Figure 5 allows a lower thermal power to be obtained from the exhaust gases for heating the conditioning fluid compared to the layout illustrated in Figure 4, yet without compromising the heating of the catalytic converter 7 (and the regeneration of the particulate filter) even during the phase of heating the conditioning fluid.

It is evident that, in all embodiments described in the preceding discussion, the exhaust gas heat recovery system 30 is arranged downstream of the burner 8.

It is evident that the invention described in the foregoing discussion can also be advantageously applied in the case where only one catalytic converter 6, 7 is provided; in this case, the exhaust gas heat recovery system 30 is interposed between the burner 8 and the catalytic converter 6, 7 or alternatively downstream of the catalytic converter 6, 7.

In use, during the normal operation of the internal combustion engine 1, the working conditions described in the following discussion are provided.

In a preliminary set-up step in which a temperature limit value which reduces the inner frictions of the internal combustion engine 1 and transmission is determined for the engine oil or for the conditioning fluid. In order to speed up the heating of the engine oil, the electronic control unit ECU is set up to control the activation of the burner 8 for a time interval necessary to reach said temperature limit value of the engine oil or conditioning fluid. The above-mentioned temperatures are detected by temperature sensors 15, 20. The time interval is typically comprised between one and five minutes.

In addition, the electronic control unit ECU is set up to control the activation of the burner 8 when the vehicle is a hybrid drive vehicle driving in electric mode or when the internal combustion engine 1 is turned off and it is simultaneously necessary to satisfy a passenger compartment heating request by means of the apparatus 18 for heating the passenger compartment.

In these conditions, the burner 8 is controlled by acting on the air flow and the fuel flow in order to maintain the temperature of the conditioning fluid within a certain range of values (typically, said range of values is defined between 40°C and 60°C).

Finally, the electronic control unit ECU is set up to control the activation of the burner 8 when the vehicle is a hybrid drive vehicle and there is a need to heat the storage system, in conditions in which the internal combustion engine 1 is turned off and the temperature of the air conditioning fluid is below a limit value.

In these conditions, the burner 8 is controlled by acting on the air flow and the fuel flow in order to maintain the temperature of the conditioning fluid within a certain range of values (typically, said range of values is defined between 30°C and 50°C).

### LIST OF REFERENCES NUMBERS

- 1: internal combustion engine
- 2: exhaust system
- 3: cylinders
- 4: exhaust duct
- 5: after-treatment system
- 6: pre-catalytic converter
- 7: catalytic converter
- 8: burner
- 9: conditioning system
- 10: pumping device
- 11: heat exchanger
- 12: block portion
- 13: head portion
- 14: engine oil tank
- 15: temperature sensor
- 16: flow adjustment device
- 17: bypass duct
- 18: duct
- 19: duct
- 20: temperature sensor
- 21: engine oil heating circuit
- 22: duct
- 23: heat exchanger
- 24: flow adjustment device
- 25: duct
- 26: three-way valve
- 28: duct
- 29: pumping device
- 30: exhaust gas heat recovery system
- 31: duct
- 32: heat exchanger
- 33: flow adjustment device
- 34: delivery duct
- 35: return duct
- 36: flow adjustment device
- 37: temperature sensor
- 38: passenger compartment heating apparatus
- 39: duct
- 40: heat exchanger
- 41: fan
- 42: flow adjustment device
- 43: storage system heating circuit
- 44: duct
- 45: heat exchanger
- 46: flow adjustment device
- ECU: electronic control unit

## Claims

1. An internal combustion engine (1) comprising a block portion (12) and a head portion (13) fluidically connected to each other for the passage of the conditioning fluid comprising:
an exhaust system (2) for exhaust gases having an exhaust gas after-treatment system (5) and a first exhaust duct (4); the exhaust gas after-treatment system (5) comprises at least one catalytic converter (6, 7) arranged along the first exhaust duct (4) and a burner (8) suited to introduce exhaust gases into the first exhaust duct (4) upstream of said at least one catalytic converter (6, 7) so as to speed up the heating of said at least one catalytic converter (6, 7);
a conditioning system (9) designed to cause a conditioning fluid to circulate in order to keep the temperature of the internal combustion engine (1) within a safe temperature range and comprising:
- at least one first pumping device (10);
- a first heat exchanger (11);
- and a first flow adjustment device (16) designed to allow the passage of the conditioning fluid leaving the head portion (13) towards the first heat exchanger (11) or towards the first pumping device (10) according to a predefined temperature threshold, which can depend on the operating conditions of the engine (1);
- a first duct (19) connecting the head portion (13) and the first flow adjustment device (16), along said first duct (19) a first temperature sensor (20) for detecting the temperature of the conditioning fluid is arranged and connected to an electronic control unit (ECU);
- a second duct (25) in which the conditioning fluid leaving the head portion (13) flows and along which a second flow adjustment device (26) is arranged;
- a second pumping device (29) housed along the second duct (25), downstream of the second flow adjustment device (26); and
an exhaust gas heat recovery system (30) housed along the first exhaust duct (4) and interposed between the burner (8) and said at least one catalytic converter (6, 7) comprising:
- a second exhaust duct (31) arranged in parallel to the first exhaust duct (4) and originating downstream of the burner (8);
- a second heat exchanger (32) housed along the second exhaust duct (31) and designed to heat the conditioning fluid by means of the exhaust gases;
- a third flow adjustment device (33), in particular a three-way valve, arranged in the area of the point where the second exhaust duct (31) originates from the first exhaust duct (4);
- a conditioning fluid delivery duct (34) which runs from the second duct (25) to the second heat exchanger (32); and
- a conditioning fluid return duct (35) for the return of the conditioning fluid from the second heat exchanger (32) to the second duct (25).

2. The engine according to claim 1, wherein the exhaust gas heat recovery system (30) is arranged upstream of said at least one catalytic converter (6, 7).

3. The engine according to claim 1, wherein the exhaust gas heat recovery system (30) is arranged downstream of said at least one catalytic converter (6, 7).

4. The engine according to claim 1, wherein the exhaust gas after-treatment system (5) comprises a pair of catalytic converters (6, 7) arranged in series along the exhaust duct (4) and the burner (8) is suited to introduce exhaust gases into the first exhaust duct (4) upstream of both catalytic converters (6, 7); the exhaust gas heat recovery system (30) is interposed between the burner (8) and a first catalytic converter (6).

5. The engine according to claim 1, wherein the exhaust gas after-treatment system (5) comprises a pair of catalytic converters (6, 7) arranged in series along the exhaust duct (4) and the burner (8) is suited to introduce exhaust gases into the first exhaust duct (4) upstream of both catalytic converters (6, 7); the exhaust gas heat recovery system (30) is interposed between a first catalytic converter (6) and a second catalytic converter (7).

6. The engine according to claim 1, wherein the exhaust gas after-treatment system (5) comprises a pair of catalytic converters (6, 7) arranged in series along the first exhaust duct (4) and the burner (8) is suited to introduce exhaust gases into the first exhaust duct (4) upstream of both catalytic converters (6, 7); the exhaust gas heat recovery system (30) is arranged downstream of a second catalytic converter (7).

7. The engine according to claim 1, wherein the exhaust gas after-treatment system (5) comprises a pair of catalytic converters (6, 7) arranged in series along the first exhaust duct (4) and the burner (8) is interposed between said catalytic converters (6, 7) and is suited to introduce exhaust gases into the first exhaust duct (4) upstream of a second catalytic converter (7); the exhaust gas heat recovery system (30) is interposed between the burner (8) and the second catalytic converter (7).

8. The engine according to claim 1, wherein the exhaust gas after-treatment system (5) comprises a pair of catalytic converters (6, 7) arranged in series along the first exhaust duct (4) and the burner (8) is interposed between said catalytic converters (6, 7) and is suited to introduce exhaust gases into the first exhaust duct (4) upstream of a second catalytic converter (7); the exhaust gas heat recovery system (30) is arranged downstream of the second catalytic converter (7).

9. The engine according to any one of the preceding claims, wherein the exhaust gas heat recovery system (30) comprises a fourth flow adjustment device (36), in particular a three-way valve, arranged in the area of the point where the conditioning fluid delivery duct (34) originates from the second duct (25)).

10. The engine according to any one of the preceding claims, wherein the exhaust gas heat recovery system (30) comprises a second temperature sensor (37) detecting the temperature of the conditioning fluid housed along the conditioning fluid return duct (35).

11. The engine according to any one of the preceding claims, wherein the conditioning system (9) comprises an apparatus (38) for heating the passenger compartment housed along the second duct (25) which includes a third duct (39) arranged in parallel to the second duct (25); a third heat exchanger (40) is arranged along the third duct (39).

12. The engine according to claim 11 and comprising a fourth flow adjustment device (42), in particular a three-way valve, housed at the point where the third duct (39) originates from the second duct (25).

13. The engine according to claim 11 or 12 wherein the air directed to the passenger compartment is forced by means of a fan (41) to pass through the third heat exchanger (40); the conditioning fluid leaving the third heat exchanger (40) is conveyed via the second duct (25) to the first pumping device (10).

14. The engine according to any one of the preceding claims and comprising a circuit (43) for heating a storage system arranged along the second duct (25) having a fourth duct (44) arranged in parallel to the second duct (25); along the fourth duct (44), there is a fourth heat exchanger (45) aimed at conditioning the storage system by means of the conditioning fluid.

15. The engine according to claim 14 and comprising a fifth flow regulating device (46), in particular a three-way valve, arranged at the point where the fourth duct (44) originates from the second duct (25).

16. The engine according to any previous claim and comprising an engine oil cooling circuit (21) flowing into the first duct (19) and comprising a fifth duct (22) which originates downstream of the first pumping device (10) and along which is housed a fifth heat exchanger (23) for cooling the engine oil by means of the conditioning fluid.

17. The engine according to claim 16 and comprising a fifth flow adjustment device (24) arranged along the fifth duct (22), downstream of the fifth heat exchanger (23).

18. A method to control an internal combustion engine (1) according to claim 16 or 17; comprising:
a preliminary set-up step in which to determine a temperature limit value for the engine oil, which reduces the inner frictions of the internal combustion engine (1), or for the conditioning fluid; and
a step in which to turn on the burner (8) for an amount of time until said temperature limit value for the engine oil or for the conditioning fluid is reached, regardless of whether a reference temperature of said at least one catalytic converter (6, 7) is reached.

19. A method to control an internal combustion engine (1) for a vehicle according to claim 11 or 12 or 13 comprises:
a step in which to recognize a passenger compartment heating request and a temperature of the conditioning fluid that is not sufficiently high; and
a step in which to turn on the burner (8) in order to fulfil said request when the vehicle is a hybrid drive vehicle driving in electric mode or when the internal combustion engine (1) is turned off.

20. A method to control an internal combustion engine (1) for a hybrid drive vehicle according claim 14 or 15 comprising:
a step in which to recognize a storage system heating request and a temperature of the conditioning fluid that is below a limit value; and
a step in which to turn on the burner (8) in order to fulfil said request when the hybrid drive vehicle is in electric mode.

21. The method according to claim 19 or 20, wherein the burner (8) is controlled by acting on the air flow and the fuel flow in order to maintain the temperature of the conditioning fluid within a range of values, preferably between 30°C and 60°C.

## Patentansprüche

1. Verbrennungsmotor (1), umfassend einen Blockabschnitt (12) und einen Kopfabschnitt (13), die für den Durchgang des Konditionierungsfluids fluidisch miteinander verbunden sind, umfassend:
ein Abgassystem (2) für Abgase, das ein Abgasnachbehandlungssystem (5) und einen ersten Abgaskanal (4) aufweist; wobei das Abgasnachbehandlungssystem (5) mindestens einen Katalysator (6, 7), der entlang des ersten Abgaskanals (4) angeordnet ist, und einen Brenner (8) umfasst, der geeignet ist, um Abgase in den ersten Abgaskanal (4) stromaufwärts des mindestens einen Katalysators (6, 7) einzuleiten, um die Erwärmung des mindestens einen Katalysators (6, 7) zu beschleunigen;
ein Konditionierungssystem (9), das ausgelegt ist, um ein Konditionierungsfluid zirkulieren zu lassen, um die Temperatur des Verbrennungsmotors (1) innerhalb eines sicheren Temperaturbereichs zu halten, und umfassend:
- mindestens eine erste Pumpvorrichtung (10);
- einen ersten Wärmetauscher (11);
- und eine erste Durchflusseinstellvorrichtung (16), die ausgelegt ist, um den Durchgang des Konditionierungsfluids, das den Kopfabschnitt (13) verlässt, in Richtung des ersten Wärmetauschers (11) oder in Richtung der ersten Pumpvorrichtung (10) gemäß einer vordefinierten Temperaturschwelle zu ermöglichen, die von den Betriebsbedingungen des Motors (1) abhängen kann;
- einen ersten Kanal (19), der den Kopfabschnitt (13) und die erste Durchflusseinstellvorrichtung (16) verbindet, wobei entlang des ersten Kanals (19) ein erster Temperatursensor (20) zum Erfassen der Temperatur des Konditionierungsfluids angeordnet und mit einer elektronischen Steuereinheit (ECU) verbunden ist;
- einen zweiten Kanal (25), in dem das Konditionierungsfluid fließt, das aus dem Kopfabschnitt (13) austritt, und entlang dem eine zweite Durchflusseinstellvorrichtung (26) angeordnet ist;
- eine zweite Pumpvorrichtung (29), die entlang dem zweiten Kanal (25) stromabwärts der zweiten Durchflusseinstellvorrichtung (26) eingerichtet ist; und
ein Abgaswärmerückgewinnungssystem (30), das entlang des ersten Abgaskanals (4) eingerichtet und zwischen dem Brenner (8) und dem mindestens einen Katalysator (6, 7) eingefügt ist, umfassend:
- einen zweiten Abgaskanal (31), der parallel zu dem ersten Abgaskanal (4) angeordnet ist und stromabwärts des Brenners (8) abgeht;
- einen zweiten Wärmetauscher (32), der entlang des zweiten Abgaskanals (31) eingerichtet und ausgelegt ist, um das Konditionierungsfluid mittels der Abgase zu erwärmen;
- eine dritte Durchflusseinstellvorrichtung (33), insbesondere ein Dreiwegeventil, angeordnet in der Region des Punkts, an dem der zweite Abluftkanal (31) von dem ersten Abluftkanal (4) abgeht;
- ein Konditionierungsfluidzufuhrkanal (34), der von dem zweiten Kanal (25) zu dem zweiten Wärmetauscher (32) verläuft; und
- einen Konditionierungsfluidrückführkanal (35) für die Rückführung des Konditionierungsfluids von dem zweiten Wärmetauscher (32) zu dem zweiten Kanal (25).

2. Motor nach Anspruch 1, wobei das Abgaswärmerückgewinnungssystem (30) stromaufwärts des mindestens einen Katalysators (6, 7) angeordnet ist.

3. Motor nach Anspruch 1, wobei das Abgaswärmerückgewinnungssystem (30) stromabwärts des mindestens einen Katalysators (6, 7) angeordnet ist.

4. Motor nach Anspruch 1, wobei das Abgasnachbehandlungssystem (5) ein Paar von Katalysatoren (6, 7) umfasst, die in Reihe entlang des Abgaskanals (4) angeordnet sind, und der Brenner (8) geeignet ist, um Abgase in den ersten Abgaskanal (4) stromaufwärts beider Katalysatoren (6, 7) einzuleiten; wobei das Abgaswärmerückgewinnungssystem (30) zwischen dem Brenner (8) und einem ersten Katalysator (6) eingefügt ist.

5. Motor nach Anspruch 1, wobei das Abgasnachbehandlungssystem (5) ein Paar von Katalysatoren (6, 7) umfasst, die in Reihe entlang des Abgaskanals (4) angeordnet sind, und der Brenner (8) geeignet ist, um Abgase in den ersten Abgaskanal (4) stromaufwärts beider Katalysatoren (6, 7) einzuleiten; wobei das Abgaswärmerückgewinnungssystem (30) zwischen einem ersten Katalysator (6) und einem zweiten Katalysator (7) eingefügt ist.

6. Motor nach Anspruch 1, wobei das Abgasnachbehandlungssystem (5) ein Paar von Katalysatoren (6, 7) umfasst, die in Reihe entlang des ersten Abgaskanals (4) angeordnet sind, und der Brenner (8) geeignet ist, Abgase stromaufwärts beider Katalysatoren (6, 7) in den ersten Abgaskanal (4) einzuleiten; wobei das Abgaswärmerückgewinnungssystem (30) stromabwärts eines zweiten Katalysators (7) angeordnet ist.

7. Motor nach Anspruch 1, wobei das Abgasnachbehandlungssystem (5) ein Paar von Katalysatoren (6, 7) umfasst, die in Reihe entlang des ersten Abgaskanals (4) angeordnet sind, und der Brenner (8) zwischen den Katalysatoren (6, 7) eingefügt und geeignet ist, um Abgase in den ersten Abgaskanal (4) stromaufwärts eines zweiten Katalysators (7) einzuleiten; wobei das Abgaswärmerückgewinnungssystem (30) zwischen dem Brenner (8) und dem zweiten Katalysator (7) eingefügt ist.

8. Motor nach Anspruch 1, wobei das Abgasnachbehandlungssystem (5) ein Paar von Katalysatoren (6, 7) umfasst, die in Reihe entlang des ersten Abgaskanals (4) angeordnet sind, und der Brenner (8) zwischen den Katalysatoren (6, 7) eingefügt und geeignet ist, um Abgase in den ersten Abgaskanal (4) stromaufwärts eines zweiten Katalysators (7) einzuleiten; wobei das Abgaswärmerückgewinnungssystem (30) stromabwärts des zweiten Katalysators (7) angeordnet ist.

9. Motor nach einem der vorstehenden Ansprüche, wobei das Abgaswärmerückgewinnungssystem (30) eine vierte Durchflusseinstellvorrichtung (36) umfasst, insbesondere ein Dreiwegeventil, angeordnet in der Region des Punkts, an dem der Konditionierungsfluidzufuhrkanal (34) von dem zweiten Kanal (25)) abgeht.

10. Motor nach einem der vorstehenden Ansprüche, wobei das Abgaswärmerückgewinnungssystem (30) einen zweiten Temperatursensor (37) umfasst, der die Temperatur des Konditionierungsfluids erfasst, der entlang des Konditionierungsfluidrückführkanals (35) eingerichtet ist.

11. Motor nach einem der vorstehenden Ansprüche, wobei das Konditionierungssystem (9) eine Einrichtung (38) zum Erwärmen des Fahrgastraums umfasst, die entlang des zweiten Kanals (25) eingerichtet ist, die einen dritten Kanal (39) einschließt, der parallel zu dem zweiten Kanal (25) angeordnet ist; wobei ein dritter Wärmetauscher (40) entlang des dritten Kanals (39) angeordnet ist.

12. Motor nach Anspruch 11 und umfassend eine vierte Durchflusseinstellvorrichtung (42), insbesondere ein Dreiwegeventil, das an dem Punkt eingerichtet ist, an dem der dritte Kanal (39) von dem zweiten Kanal (25) abgeht.

13. Motor nach Anspruch 11 oder 12, wobei die Luft, die in den Fahrgastraum geleitet wird, mittels eines Ventilators (41) gezwungen wird, durch den dritten Wärmetauscher (40) zu passieren; wobei das Konditionierungsfluid, das den dritten Wärmetauscher (40) verlässt, über den zweiten Kanal (25) zu der ersten Pumpvorrichtung (10) gefördert wird.

14. Motor nach einem der vorstehenden Ansprüche und umfassend einen Kreislauf (43) zum Erwärmen eines Speichersystems, das entlang des zweiten Kanals (25) angeordnet ist, das einen vierten Kanal (44) aufweist, der parallel zu dem zweiten Kanal (25) angeordnet ist; wobei entlang des vierten Kanals (44) ein vierter Wärmetauscher (45) vorhanden ist, der dazu dient, das Speichersystem mittels des Konditionierungsfluids zu konditionieren.

15. Motor nach Anspruch 14 und umfassend eine fünfte Durchflussregelvorrichtung (46), insbesondere ein Dreiwegeventil, angeordnet an dem Punkt, an dem der vierte Kanal (44) von dem zweiten Kanal (25) abgeht.

16. Motor nach einem der vorstehenden Ansprüche und umfassend einen Motorölkühlkreislauf (21), der in den ersten Kanal (19) fließt und umfassend einen fünften Kanal (22), der stromabwärts der ersten Pumpvorrichtung (10) abgeht und entlang dem ein fünfter Wärmetauscher (23) zum Kühlen des Motoröls mittels des Konditionierungsfluids eingerichtet ist.

17. Motor nach Anspruch 16 und umfassend eine fünfte Durchflusseinstellvorrichtung (24), die entlang des fünften Kanals (22) stromabwärts des fünften Wärmetauschers (23) angeordnet ist.

18. Verfahren, um einen Verbrennungsmotor (1) nach Anspruch 16 oder 17 zu steuern; umfassend:
einen vorbereitenden Aufbauschritt, in dem ein Temperaturgrenzwert für das Motoröl, das die innere Reibung des Verbrennungsmotors (1) verringert, oder für das Konditionierungsfluid bestimmt wird; und
einen Schritt, in dem der Brenner (8) für eine Zeitspanne eingeschaltet wird, bis der Temperaturgrenzwert für das Motoröl oder für das Konditionierungsfluid erreicht ist, unabhängig davon, ob eine Referenztemperatur des mindestens einen Katalysators (6, 7) erreicht ist.

19. Verfahren, um einen Verbrennungsmotor (1) für ein Fahrzeug nach Anspruch 11 oder 12 oder 13 zu steuern, das umfasst:
einen Schritt, in dem eine Fahrgastraumerwärmungsanforderung und eine Temperatur des Konditionierungsfluids erkannt werden, die nicht ausreichend hoch ist; und
einen Schritt, in dem der Brenner (8) eingeschaltet wird, um die Anforderung zu erfüllen, wenn das Fahrzeug ein Hybridfahrzeug ist, das in einem Elektromodus fährt, oder wenn der Verbrennungsmotor (1) ausgeschaltet ist.

20. Verfahren, um einen Verbrennungsmotor (1) für ein Hybridfahrzeug nach Anspruch 14 oder 15 zu steuern, umfassend:
einen Schritt, in dem eine Speichersystemerwärmungsanforderung und eine Temperatur des Konditionierungsfluids erkannt werden, die unterhalb eines Grenzwertes liegt; und
einen Schritt, in dem der Brenner (8) eingeschaltet wird, um die Anforderung zu erfüllen, wenn sich das Hybridfahrzeug in dem Elektromodus befindet.

21. Verfahren nach Anspruch 19 oder 20, wobei der Brenner (8) durch ein Einwirken auf den Luftfluss und den Brennstofffluss gesteuert wird, um die Temperatur des Konditionierungsfluids innerhalb eines Wertebereichs, vorzugsweise zwischen 30 °C und 60 °C, zu halten.

## Revendications

1. Moteur à combustion interne (1) comprenant une partie bloc (12) et une partie tête (13) reliées fluidiquement l'une à l'autre pour le passage du fluide de conditionnement comprenant :
un système d'échappement (2) pour les gaz d'échappement ayant un système de post-traitement des gaz d'échappement (5) et un premier conduit d'échappement (4) ; le système de post-traitement des gaz d'échappement (5) comprend au moins un convertisseur catalytique (6, 7) agencé le long du premier conduit d'échappement (4) et un brûleur (8) approprié pour introduire des gaz d'échappement dans le premier conduit d'échappement (4) en amont dudit au moins un convertisseur catalytique (6, 7) de manière à accélérer le chauffage dudit au moins un convertisseur catalytique (6, 7) ;
un système de conditionnement (9) conçu pour amener un fluide de conditionnement à circuler afin de maintenir la température du moteur à combustion interne (1) au sein d'une plage de température sûre et comprenant :
- au moins un premier dispositif de pompage (10) ;
- un premier échangeur de chaleur (11) ;
- et un premier dispositif d'ajustement d'écoulement (16) conçu pour permettre le passage du fluide de conditionnement quittant la partie tête (13) vers le premier échangeur de chaleur (11) ou vers le premier dispositif de pompage (10) selon un seuil de température prédéfini, qui peut dépendre des conditions de fonctionnement du moteur (1) ;
- un premier conduit (19) reliant la partie tête (13) et le premier dispositif d'ajustement d'écoulement (16), le long dudit premier conduit (19) un premier capteur de température (20) pour détecter la température du fluide de conditionnement est agencé et relié à une unité de commande électronique (ECU) ;
- un deuxième conduit (25) dans lequel le fluide de conditionnement quittant la partie tête (13) s'écoule et le long duquel un deuxième dispositif d'ajustement d'écoulement (26) est agencé ;
- un second dispositif de pompage (29) logé le long du deuxième conduit (25), en aval du deuxième dispositif d'ajustement d'écoulement (26) ; et
un système de récupération de chaleur des gaz d'échappement (30) logé le long du premier conduit d'échappement (4) et interposé entre le brûleur (8) et ledit au moins un convertisseur catalytique (6, 7) comprenant :
- un second conduit d'échappement (31) agencé parallèlement au premier conduit d'échappement (4) et prenant naissance en aval du brûleur (8) ;
- un deuxième échangeur de chaleur (32) logé le long du second conduit d'échappement (31) et conçu pour chauffer le fluide de conditionnement au moyen des gaz d'échappement ;
- un troisième dispositif d'ajustement d'écoulement (33), en particulier une soupape à trois voies, agencé dans la zone du point où le second conduit d'échappement (31) prend naissance à partir du premier conduit d'échappement (4) ;
- un conduit de distribution de fluide de conditionnement (34) qui s'étend du deuxième conduit (25) au deuxième échangeur de chaleur (32) ; et
- un conduit de retour du fluide de conditionnement (35) pour le retour du fluide de conditionnement du deuxième échangeur de chaleur (32) vers le deuxième conduit (25).

2. Moteur selon la revendication 1, dans lequel le système de récupération de chaleur des gaz d'échappement (30) est agencé en amont dudit au moins un convertisseur catalytique (6, 7).

3. Moteur selon la revendication 1, dans lequel le système de récupération de chaleur des gaz d'échappement (30) est agencé en aval dudit au moins un convertisseur catalytique (6, 7).

4. Moteur selon la revendication 1, dans lequel le système de post-traitement des gaz d'échappement (5) comprend une paire de convertisseurs catalytiques (6, 7) agencés en série le long du conduit d'échappement (4) et le brûleur (8) est approprié pour introduire des gaz d'échappement dans le premier conduit d'échappement (4) en amont des deux convertisseurs catalytiques (6, 7) ; le système de récupération de chaleur des gaz d'échappement (30) est interposé entre le brûleur (8) et un premier convertisseur catalytique (6).

5. Moteur selon la revendication 1, dans lequel le système de post-traitement des gaz d'échappement (5) comprend une paire de convertisseurs catalytiques (6, 7) agencés en série le long du conduit d'échappement (4) et le brûleur (8) est approprié pour introduire des gaz d'échappement dans le premier conduit d'échappement (4) en amont des deux convertisseurs catalytiques (6, 7) ; le système de récupération de chaleur des gaz d'échappement (30) est interposé entre un premier convertisseur catalytique (6) et un second convertisseur catalytique (7).

6. Moteur selon la revendication 1, dans lequel le système de post-traitement des gaz d'échappement (5) comprend une paire de convertisseurs catalytiques (6, 7) agencés en série le long du premier conduit d'échappement (4) et le brûleur (8) est approprié pour introduire des gaz d'échappement dans le premier conduit d'échappement (4) en amont des deux convertisseurs catalytiques (6, 7) ; le système de récupération de chaleur des gaz d'échappement (30) est agencé en aval d'un second convertisseur catalytique (7).

7. Moteur selon la revendication 1, dans lequel le système de post-traitement des gaz d'échappement (5) comprend une paire de convertisseurs catalytiques (6, 7) agencés en série le long du premier conduit d'échappement (4) et le brûleur (8) est interposé entre lesdits convertisseurs catalytiques (6, 7) et est approprié pour introduire des gaz d'échappement dans le premier conduit d'échappement (4) en amont d'un second convertisseur catalytique (7) ; le système de récupération de chaleur des gaz d'échappement (30) est interposé entre le brûleur (8) et le second convertisseur catalytique (7).

8. Moteur selon la revendication 1, dans lequel le système de post-traitement des gaz d'échappement (5) comprend une paire de convertisseurs catalytiques (6, 7) agencés en série le long du premier conduit d'échappement (4) et le brûleur (8) est interposé entre lesdits convertisseurs catalytiques (6, 7) et est approprié pour introduire des gaz d'échappement dans le premier conduit d'échappement (4) en amont d'un second convertisseur catalytique (7) ; le système de récupération de chaleur des gaz d'échappement (30) est agencé en aval du second convertisseur catalytique (7).

9. Moteur selon l'une quelconque des revendications précédentes, dans lequel le système de récupération de chaleur des gaz d'échappement (30) comprend un quatrième dispositif d'ajustement d'écoulement (36), en particulier une soupape à trois voies, agencé dans la zone du point où le conduit de distribution de fluide de conditionnement (34) prend naissance à partir du second conduit (25)).

10. Moteur selon l'une quelconque des revendications précédentes, dans lequel le système de récupération de chaleur des gaz d'échappement (30) comprend un second capteur de température (37) détectant la température du fluide de conditionnement logé le long du conduit de retour de fluide de conditionnement (35).

11. Moteur selon l'une quelconque des revendications précédentes, dans lequel le système de conditionnement (9) comprend un appareil (38) pour le chauffage de l'habitacle logé le long du deuxième conduit (25) qui comporte un troisième conduit (39) agencé parallèlement au deuxième conduit (25) ; un troisième échangeur de chaleur (40) est agencé le long du troisième conduit (39).

12. Moteur selon la revendication 11 et comprenant un quatrième dispositif d'ajustement d'écoulement (42), en particulier une soupape à trois voies, logé au niveau du point où le troisième conduit (39) prend naissance à partir du deuxième conduit (25).

13. Moteur selon la revendication 11 ou 12, dans lequel l'air dirigé vers l'habitacle est forcé, au moyen d'un ventilateur (41), à traverser le troisième échangeur de chaleur (40) ; le fluide de conditionnement quittant le troisième échangeur de chaleur (40) est acheminé par l'intermédiaire du deuxième conduit (25) vers le premier dispositif de pompage (10).

14. Moteur selon l'une quelconque des revendications précédentes et comprenant un circuit (43) pour le chauffage d'un système de stockage agencé le long du deuxième conduit (25) ayant un quatrième conduit (44) agencé parallèlement au deuxième conduit (25) ; le long du quatrième conduit (44), il y a un quatrième échangeur de chaleur (45) destiné à conditionner le système de stockage au moyen du fluide de conditionnement.

15. Moteur selon la revendication 14 et comprenant un cinquième dispositif d'ajustement d'écoulement (46), en particulier une soupape à trois voies, agencé au niveau du point où le quatrième conduit (44) prend naissance à partir du deuxième conduit (25).

16. Moteur selon l'une quelconque revendication précédente et comprenant un circuit de refroidissement de l'huile moteur (21) s'écoulant dans le premier conduit (19) et comprenant un cinquième conduit (22) qui prend naissance en aval du premier dispositif de pompage (10) et le long duquel est logé un cinquième échangeur de chaleur (23) pour le refroidissement de l'huile moteur au moyen du fluide de conditionnement.

17. Moteur selon la revendication 16 et comprenant un cinquième dispositif d'ajustement d'écoulement (24) agencé le long du cinquième conduit (22), en aval du cinquième échangeur de chaleur (23).

18. Procédé de commande d'un moteur à combustion interne (1) selon la revendication 16 ou 17 ; comprenant :
une étape de réglage préliminaire au cours de laquelle on détermine une valeur limite de température pour l'huile moteur, qui réduit les frictions internes du moteur à combustion interne (1), ou pour le fluide de conditionnement ; et
une étape au cours de laquelle on met en marche le brûleur (8) pendant un certain temps jusqu'à ce que la valeur limite de température pour l'huile moteur ou pour le fluide de conditionnement soit atteinte, indépendamment du fait qu'une température de référence dudit au moins un convertisseur catalytique (6, 7) est atteinte ou non.

19. Procédé de commande d'un moteur à combustion interne (1) pour un véhicule selon la revendication 11 ou 12 ou 13 comprend :
une étape au cours de laquelle on reconnaît une demande de chauffage d'habitacle et une température du fluide de conditionnement qui n'est pas suffisamment élevée ; et
une étape au cours de laquelle on met en marche le brûleur (8) afin de répondre à ladite demande lorsque le véhicule est un véhicule à conduite hybride roulant en mode électrique ou lorsque le moteur à combustion interne (1) est éteint.

20. Procédé de commande d'un moteur à combustion interne (1) pour un véhicule à conduite hybride selon la revendication 14 ou 15, comprenant :
une étape au cours de laquelle on reconnaît une demande de chauffage de système de stockage et une température du fluide de conditionnement qui est inférieure à une valeur limite ; et
une étape au cours de laquelle on met en marche le brûleur (8) afin de répondre à ladite demande lorsque le véhicule à conduite hybride est en mode électrique.

21. Procédé selon la revendication 19 ou 20, dans lequel le brûleur (8) est commandé en agissant sur l'écoulement d'air et l'écoulement de combustible afin de maintenir la température du fluide de conditionnement au sein d'une plage de valeurs, de préférence entre 30 °C et 60 °C.
